# EUROPEAN PATENT APPLICATION

(11) **EP 3 833 114 A1**
(43) Date of publication of application: **09.06.2021**
(21) Application number: 19844247.7
(22) Date of filing: 02.08.2019
(51) Int. Cl.: H04W 52/02

(54) **METHOD FOR TRANSMITTING SIGNAL, TERMINAL DEVICE, AND NETWORK DEVICE**

(30) Priority: 03.08.2018 CN 201810880378
(71) Applicant: GUANGDONG OPPO MOBILE TELECOMMUNICATIONS CORP., LTD., Dongguan Guangdong 523860 (CN)
(72) Inventor: XU, Weijie, Dongguan, Guangdong 523860 (CN)
(74) Representative: Ipside
(86) International application number: PCT/CN2019/099086
(87) International publication number: WO 2020/025061

(57) **Abstract**

Embodiments of the present application disclose a method for transmitting a signal, a terminal device, and a network device. The method includes: the terminal device determines a first time-frequency resource for carrying a first signal, where the first signal is used to indicate detection processing for a corresponding channel or signal, and the first time-frequency resource belongs to a channel state information reference signal (CSI-RS) resource set capable of carrying a CSI-RS or belongs to a synchronization signal block (SSB) resource set capable of carrying a synchronization signal (SS)/a physical broadcast channel (PBCH); and the terminal device receives the first signal on the first time-frequency resource. The method, terminal device, and network device of the embodiments of the present application can maintain better backward compatibility, and facilitate the terminal device to perform rate matching on the resource where the first signal similar to the power saving signal is located.

## Description

This application claims priority to Chinese Application No. 201810880378.3, filed to the China National Intellectual Property Administration on August 03, 2018 and entitled "Method for transmitting signal, terminal device, and network device", which is hereby incorporated by reference in its entirety.

### TECHNICAL FIELD

Embodiments of the present application relate to the field of communication technologies and, in particular, to a method for transmitting a signal, a terminal device, and a network device.

### BACKGROUND

With the evolution of communication systems, higher requirements are put forward for power saving of terminals. For example, for the existing discontinuous reception (Discontinuous Reception, DRX) mechanism, in each on duration (On Duration), a terminal needs to continuously detect the physical downlink control channel (Physical Downlink Control Channel, PDCCH) to determine whether a base station schedules data transmission that is sent to the terminal itself. However, for most terminals, there may be no need to receive data transmission for a long time, but it is still necessary to maintain a regular wake-up mechanism to monitor possible downlink transmission. For such terminals, there is room for further optimization for power saving. The situation is similar for a terminal receiving a paging message in an idle state.

For the DRX mechanism, an indication signal may be sent to a terminal before the On Duration, and the terminal performs PDCCH detection and data reception during the On Duration of the DRX only after detecting the indication signal, otherwise no PDCCH detection is performed. The indication signal may also be referred to as a power saving signal (power saving signal, WUS). Similarly, for the terminal in the idle state to receive a paging message, before a paging occasion (paging occasion, PO), it is determined, by detecting the power saving signal, whether to detect the PDCCH in this PO. At present, the time-frequency resource occupied by the power saving signal has not been determined.

### SUMMARY

Embodiments of the present application provide a method for transmitting a signal, which can maintain better backward compatibility, and facilitate a terminal device to perform rate matching on a resource where a first signal similar to a power saving signal is located.

In a first aspect, a method for transmitting a signal is provided, which includes: the terminal device determines a first time-frequency resource for carrying a first signal, where the first signal is used to indicate detection processing for a corresponding channel or signal, and the first time-frequency resource belongs to a channel state information reference signal (CSI-RS) resource set capable of carrying a CSI-RS or belongs to a synchronization signal block (SSB) resource set capable of carrying a synchronization signal (SS)/a physical broadcast channel (PBCH); and the terminal device receives the first signal on the first time-frequency resource.

In a second aspect, a method for transmitting a signal is provided, which includes: a network device determines a first time-frequency resource for carrying a first signal, where the first signal is used to indicate the terminal device to perform detection processing on a corresponding channel or signal, and the first time-frequency resource belongs to a channel state information reference signal (CSI-RS) resource set capable of carrying a CSI-RS or belongs to a synchronization signal block (SSB) resource set capable of carrying the synchronization signal (SS)/s physical broadcast channel (PBCH); and the network device sends a first signal to the terminal device on the first time-frequency resource.

In a third aspect, a terminal device is provided, which is used to execute the method in the foregoing first aspect or each implementation thereof.

Specifically, the terminal device includes a functional module for executing the method in the above first aspect or each implementation thereof.

In a fourth aspect, a network device is provided, which is used to execute the method in the above second aspect or each implementation thereof.

Specifically, the network device includes a functional module for executing the method in the above second aspect or each implementation thereof.

In a fifth aspect, a terminal device is provided, which includes a processor and a memory. The memory is used to store a computer program, and the processor is used to call and run the computer program stored in the memory to execute the method in the above first aspect or each implementation thereof.

In a sixth aspect, a network device is provided, which includes a processor and a memory. The memory is used to store a computer program, and the processor is used to call and run the computer program stored in the memory to execute the method in the above second aspect or each implementation thereof.

In a seventh aspect, a chip is provided for implementing any one of the above first aspect to second aspect or the method in each implementation thereof.

Specifically, the chip includes: a processor, configured to call and run a computer program from the memory, so that the device installed with the chip executes any one of the above first aspect to second aspect or the method in each implementation thereof.

In an eighth aspect, a computer-readable storage medium is provided for storing a computer program that enables a computer to execute any one of the above first aspect to second aspect or the method in each implementation thereof.

In a ninth aspect, a computer program product is provided, which includes computer program instructions that enable a computer to execute any one of the above first aspect to second aspect or the method in each implementation thereof.

In a tenth aspect, a computer program is provided, which, when running on a computer, causes the computer to execute any one of the above first aspect to second aspect or the method in each implementation thereof.

Through the above technical solutions, the pre-defined time-frequency resource that is capable to carry CSI-RS or the pre-defined time-frequency resource that is capable to carry SS/PBCH block is used to carry the first signal similar to the power saving signal, which can maintain better backward compatibility, and facilitate the terminal device to perform rate matching on the resource where the first signal is located.

### BRIEF DESCRIPTION OF DRAWINGS

FIG. 1 is a schematic diagram of architecture of a communication system according to an embodiment of the present application.
FIG. 2 is a schematic diagram of an application scenario according to an embodiment of the present application.
FIG. 3 is a schematic diagram of a method for transmitting a signal provided by an embodiment of the present application.
FIG. 4 is a configuration diagram of CSI-RS resources according to an embodiment of the present application.
FIG. 5 is a configuration diagram of SSB resources according to an embodiment of the present application.
FIG. 6 is another schematic diagram of a method for transmitting a signal provided by an embodiment of the present application.
FIG. 7 is a schematic block diagram of a terminal device according to an embodiment of the present application.
FIG. 8 is a schematic block diagram of a network device according to an embodiment of the present application.
FIG. 9 is another schematic block diagram of a terminal device according to an embodiment of the present application.
FIG. 10 is another schematic block diagram of a network device according to an embodiment of the present application.
FIG. 11 is a schematic block diagram of a chip according to an embodiment of the present application.
FIG. 12 is a schematic block diagram of a communication system according to an embodiment of the present application.

### DESCRIPTION OF EMBODIMENTS

The technical solutions in embodiments of the present application will be described hereunder with reference to the accompanying drawings in the embodiments of the present application. Apparently, the described embodiments are merely a part of the embodiments of the present application, rather than all the embodiments thereof. All other embodiments obtained by persons of ordinary skill in the art based on embodiments of the present application without a creative effort shall belong to the protection scope of the present application.

The technical solutions of the embodiments of the present application can be applied to various communication systems, for example: a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD), an universal mobile telecommunication system (Universal Mobile Telecommunication System, UMTS), a worldwide interoperability for microwave access (Worldwide Interoperability for Microwave Access, WiMAX) communication system or a 5G system, etc.

Exemplarily, the communication system applied in an embodiment of the present application may include a network device, and the network device may be a device that communicates with a terminal device (or called a communication terminal or a terminal). The network device can provide communication coverage for a specific geographic area, and can communicate with the terminal device located in the coverage area. Optionally, the network device may be a base station (Base Transceiver Station, BTS) in a GSM system or a CDMA system, may also be a base station (NodeB, NB) in a WCDMA system, or may further be an evolved base station (Evolutional Node B, eNB or eNodeB), or a wireless controller in the cloud radio access network (Cloud Radio Access Network, CRAN), or the network device may be a mobile switching center, a relay station, an access point, a vehicle-mounted device, a wearable device, a hub, a switch, a network bridge, a router, a network-side device in 5G networks, or a network device in the future evolution public land mobile network (Public Land Mobile Network, PLMN), etc.

The communication system applied in an embodiment of the present application further includes at least one terminal device located within the coverage area of the network device. The "terminal device" as used herein includes but is not limited to a UE, an access terminal, a user unit, a user station, a mobile station, a mobile station, a remote station, a remote terminal, a mobile device, a user terminal, a terminal, a wireless communication device, a user agent or a user apparatus. The access terminal can be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), and a handheld device with a function of wireless communication, a computing device or other processing device connected to a wireless modem, a vehicle-mounted device, a wearable device, a terminal device in the future 5G network or a terminal device in the future evolution public land mobile communication network (Public Land Mobile Network, PLMN), etc., which is not limited in the embodiment of the present invention.

Optionally, a 5G system or a 5G network may also be referred to as a new radio (New Radio, NR) system or a NR network.

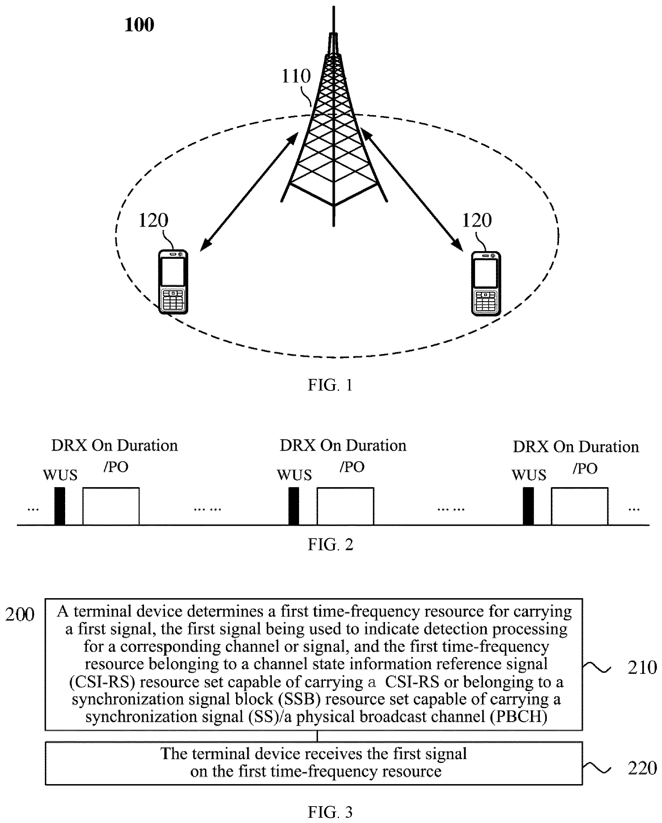

FIG. 1 exemplarily shows one network device and two terminal devices. Optionally, the communication system 100 may include multiple network devices and the coverage of each network device may include other numbers of terminal devices, which are not limited in the embodiment of the present application.

Optionally, the communication system 100 may also include other network entities such as a network controller and a mobility management entity, which are not limited in embodiments of the present application.

It should be understood that the devices with communication functions in the network/system of the embodiments of the present application may be referred to as communication devices. Taking the communication system 100 shown in FIG. 1 as an example, the communication device may include a network device 110 with a communication function and a terminal device 120. The network device 110 and the terminal device 120 may be the specific devices described above, which will not be repeated here. The communication device may also include other devices in the communication system 100, for example, other network entities such as a network controller and a mobility management entity, which are not limited in the embodiments of the present application.

It should be understood that the terms "system" and "network" herein are often used interchangeably in this article. The term "and/or" herein is only an association relationship describing associated objects, which means that there can be three relationships, for example, A and/or B, which can mean these three situations: A exists independently, A and B exist at the same time, and B exists independently. In addition, the character "/" herein generally indicates that the associated objects before and after are in an "or" relationship.

In order to reduce the power consumption of the terminal, both LTE and NR systems have DRX mechanisms, so that the terminal does not have to turn on the receiver all the time when there is no data reception, but enters a state of discontinuous reception, thereby achieving the purpose of saving power. The DRX mechanism includes configuring a DRX cycle for the UE in a connected state. A DRX cycle is composed of "On Duration" and "Opportunity for DRX". During the "On Duration" time, that is, the On Duration of DRX, the UE monitors and receives a downlink channel and a signal including the physical downlink control channel (Physical Downlink Control Channel, PDCCH); and within the time of "Opportunity for DRX", that is, the off duration of the DRX, the UE does not receive or detect downlink channels and signals such as PDCCH to reduce power consumption. The UE in the idle state needs to receive a paging message in a similar manner to DRX. There is a paging occasion (PO) in a DRX cycle. The UE only receives a paging message at PO, and does not accept a paging message outside PO, so as to achieve the purpose of power saving. During the PO, the UE determines whether there is a paging message by detecting the PDCCH signal scrambled by the paging radio network temporary identity (Paging Radio Network Tempory Identity, P-RNTI).

In the evolution of 5G, higher requirements are put forward for UE power saving. For example, for the existing DRX mechanism, during each On Duration, the UE needs to continuously detect the PDCCH to determine whether the base station schedules data transmission sent to itself. However, for most UEs, there may not be a need to receive data transmission for a long time, but it is still necessary to maintain a regular wake-up mechanism to monitor a possible downlink transmission. For this type of UE, power saving has room for further optimization. The situation is similar for the UE in the idle state to receive a paging message.

If determining that it is necessary to schedule the terminal in DRX On Duration, the base station can send an indication signal to the terminal before the On Duration, otherwise the indication signal is not sent to the terminal. The terminal performs PDCCH detection and data reception in the On Duration of DRX only after detecting the indication signal, otherwise it does not perform PDCCH detection. The above indication signal is conducive to the power saving of the terminal, and we can also call it WUS. At this time, the UE only needs to detect the power-saving signal to determine whether to detect the PDCCH during this On Duration, which can save power compared to directly detecting the PDCCH. Similarly, for a UE in an idle state to receive a paging message, it determines whether the PDCCH needs to be detected in the current PO through detecting the power-saving signal before the PO, as shown in FIG. 2.

A WUS is introduced in the NR, but the time-frequency resource where the WUS is located has not been determined. Since the channel and signal defined in NR occupy a corresponding time-frequency resource, respectively, the time-frequency resource occupied by the WUS cannot conflict with existing channels and signals, and backward compatibility needs to be maintained.

Therefore, the embodiment of the present application provides a method for transmitting a signal, which can use predefined time-frequency resources that can be used to carry a channel state information reference signal (Channel State Information Reference Signal, CSI-RS) or can be used to carry time-frequency resource of synchronization signal/physical broadcasting channel (Synchronization Signal/Physical Broadcasting Channel, SS/PBCH) block (SSB) to carry a first signal similar to the power-saving signal, which can maintain better backward compatibility and is convenient for the terminal device to perform rate matching on the resource where the first signal is located.

FIG. 3 shows a schematic block diagram of a method for transmitting a signal 200 according to an embodiment of the present application. As shown in FIG. 3, the method 200 includes some or all of the following content:

S210: a terminal device determines a first time-frequency resource for carrying a first signal, the first signal being used to indicate detection processing for a corresponding channel or signal, and the first time-frequency resource belonging to channel state information reference signal (CSI-RS) resource set capable of carrying a CSI-RS or belonging to a synchronization signal block (SSB) resource set capable of carrying a synchronization signal (SS)/a physical broadcast channel (PBCH); and

S220: The terminal device receives the first signal on the first time-frequency resource.

With the evolution of communication systems, CSI-RS is introduced for downlink channel measurement. Different communication systems have different definitions for CSI-RS. For example, in NR, Table 1 shows possible positions of CSI-RS in a time slot, which can be determined by the number of ports that can pass CSI-RS, the type of code division multiplexing (Code Division Multiplexing, CDM), the CDM group index, and the position of resource element (Resource Element, RE), and the cycle.

**Table 1**

| Index | Port number | Density | CDM type | CDM group index j | RE position (*k̅*,*l̅*) |
|---|---|---|---|---|---|
| 1 | 1 | 3 | No CDM | 0,0,0 | (*k*₀,*l*₀) (*k*₀+4,*l*₀) (*k*₀+8,*l*₀) |
| 2 | 1 | 1,0.5 | No CDM | 0 | (*k*₀,*l*₀) |
| 3 | 2 | 1,0.5 | FD-CDM2 | 0 | (*k*₀,*l*₀) |
| 4 | 4 | 1 | FD-CDM2 | 0,1 | (*k*₀,*l*₀) (*k*₀+2,*l*₀) |
| 5 | 4 | 1 | FD-CDM2 | 0,1 | (*k*₀,*l*₀) (*k*₀,*l*₀+1) |
| 6 | 8 | 1 | FD-CDM2 | 0,1,2,3 | (*k*₀,*l*₀) (*k*₁,*l*₀) (*k*₂,*l*₀) (*k*₃*,l*₀) |
| 7 | 8 | 1 | FD-CDM2 | 0,1,2,3 | (*k*₀,*l*₀) (*k*₁,*l*₀) (*k*₀,*l*₀ +1) (*k*₁,*l*₀) +1) |
| 8 | 8 | 1 | CDM4 (FD2,TD2) | 0,1 | (*k*₀,*l*₀) (*k*₁,*l*₀) |
| 9 | 12 | 1 | FD-CDM2 | 0,1,2,3,4,5 | (*k*₀,*l*₀) (*k*₁,*l*₀) (*k*₂,*l*₀) (*k*₃*,l*₀) (*k*₄,*l*₀) (*k*₅,*l*₀) |
| 10 | 12 | 1 | CDM4 (FD2,TD2) | 0,1,2 | (*k*₀,*l*₀) (*k*₁,*l*₀) (*k*₂,*l*₀) |
| 11 | 16 | 1,0.5 | FD-CDM2 | 0,1,2,3,4,5,6, 7 | (*k*₀,*l*₀) (*k*₁,*l*₀) (*k*₂,*l*₀) (*k*₃,*l*₀) (*k*₀,*l*₀ +1) (*k*₁,*l*₀ +1) (*k*₂,*l*₀ +1) (*k*₃,*l*₀ +1) |
| 12 | 16 | 1,0.5 | CDM4 (FD2,TD2) | 0,1,2,3 | (*k*₀,*l*₀) (*k*₁,*l*₀) (*k*₂,*l*₀) (*k*₃,*l*₀) |
| 13 | 24 | 1,0.5 | FD-CDM2 | 0,1,2,3,4,5,6, 7,8,9,10,11 | (*k*₀,*l*₀) (*k*₁,*l*₀) (*k*₂,*l*₀) (*k*₀,*l*₀ +1) (*k*₁,*l*₀ +1) (*k*₂,*l*₀ +1) (*k*₀,*l*₁) (*k*₁,*l*₁) (*k*₂,*l*₁) (*k*₀,*l*₁ +1) (*k*₁,*l*₁ +1) (*k*₂,*l*₁ +1) |
| 14 | 24 | 1,0.5 | CDM4 (FD2,TD2) | 0,1,2,3,4,5 | (*k*₀,*l*₀) (*k*₁,*l*₀) (*k*₂,*l*₀) (*k*₀,*l*₁) (*k*₁,*l*₁) (*k*₂,*l*₁) |
| 15 | 24 | 1,0.5 | CDM8 (FD2,TD4) | 0,1,2 | (*k*₀,*l*₀) (*k*₁,*l*₀) (*k*₂,*l*₀) |
| 16 | 32 | 1,0.5 | FD-CDM2 | 0,1,2,3,4,5,6, 7,8,9,10,11,12 , 13,14,15 | (*k*₀,*l*₀) (*k*₁,*l*₀) (*k*₂,*l*₀) (*k*₃,*l*₀) (*k*₀,*l*₀ +1) (*k*₁,*l*₀ +1) (*k*₂,*l*₀ +1) (*k*₃,*l*₀ +1(*k*₀,*l*₁) (*k*₁,*l*₁) (*k*₂,*l*₁) (*k*₃,*l*₁) (*k*₀,*l*₁ +1) (*k*₁,*l*₀ +1) (*k*₂,*l*₁ +1) (*k*₃,*l*₁ +1) |
| 17 | 32 | 1,0.5 | CDM4 (FD2,TD2) | 0,1,2,3,4,5,6, 7 | (*k*₀,*l*₀) (*k*₁,*l*₀) (*k*₂,*l*₀) (*k*₃*,l*₀) (*k*₀,*l*₁) (*k*₁,*l*₁) (*k*₂,*l*₁) (*k*₃,*l*₁) |
| 18 | 32 | 1,0.5 | CDM8 (FD2,TD4) | 0,1,2,3 | (*k*₀,*l*₀) (*k*₁,*l*₀) (*k*₂,*l*₀) (*k*₃,*l*₀) |

In Table 1, the CDM type may include No CDM, Frequency Division (Frequency Division-CDM, FD-CDM) 2, CDM4 (FD2, time division (Time Division, TD) 2), CDM8 (FD2, TD4), and so on.

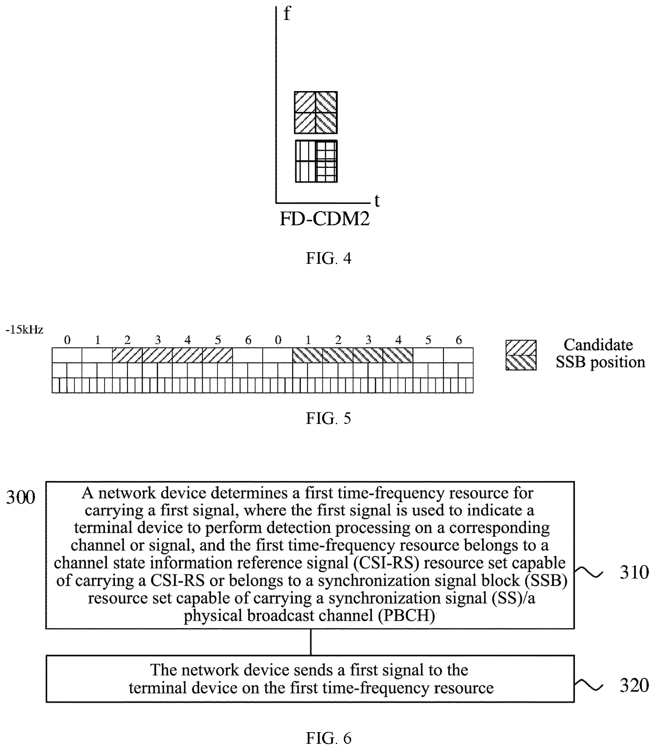

Taking index 7 in Table 1 as an example, the CSI-RS resource may be as shown in FIG. 4, the horizontal axis is time domain t, and the vertical axis is frequency domain f. The CSI-RS resource includes CSI-RS resource with 8-port, which includes 4 CDM groups, and each CDM group includes CSI-RS resource with 2 ports. The CDM type is frequency division FD-CDM2, that is, in the frequency domain, two REs use CDM to carry CSI-RS with two ports.

In embodiments of the present application, the CSI-RS resource set may be all the CSI-RS resources in Table 1 defined above, or part of the CSI-RS resources in Table 1. For example, the CSI-RS resource set maybe include the CSI-RS resources of index 1 to index 5 in Table 1. The embodiment of the application does not make any limitation on the CSI-RS resource set, as long as it is defined to carry CSI-RS. That is to say, the first signal can be carried on any CSI-RS resource defined in Table 1.

For the same terminal device, the CSI-RS resource configured by the network device for the terminal device to carry the CSI-RS and the resource configured by the network device for the terminal device to carry the first signal belong to the aforementioned CSI-RS resource collection, and they cannot conflict with each other.

Similarly, in order to improve the reliability of public channels and signal reception, such as SS and PBCH, the entire cell can be covered by multi-beam scanning, which can be achieved by defining SS/PBCH burst sets. An SS/PBCH burst set includes one or more SSBs, and one SSB is used to carry the SS and the PBCH of a beam. Therefore, one SS/PBCH burst set can include SSB with SSB number beams in the cell. The maximum number L of the SSB is related to the frequency band of the system. For example, for a frequency range less than 3GHz, L is 4; for a frequency range from 3GHz to 6GHz, L is 8; and for a frequency range from 6GHz to 52.6GHz, L is 64.

An SSB can contain a primary synchronization signal (Primary Synchronization Signal, PSS) of one symbol, a secondary synchronization signal (Secondary Synchronization Signal, SSS) of one symbol, and a PBCH of two symbols. All SSBs in the SS/PBCH burst set are sent within a time window of 5ms, and are sent repeatedly in a certain cycle. The cycle is configured by the high-level parameter SSB-timing, including 5ms, 10ms, 20ms, 40ms, 80ms, 160ms, etc.

FIG. 5 shows the distribution diagram of SSBs in a time slot with a subcarrier spacing of 15 kHz as an example. It can be seen from the figure that the time-frequency resources used to carry the SSB are predefined and may include L time-frequency resource positions. However, in an actual system, the network device can send less than L SSBs, that is, the actual transmitted SSBs, to the terminal device. The actually sent SSBs can be notified to the terminal device through a bitmap (bitmap), and the terminal device can obtain the time-frequency resource positions of the SSBs that are actually sent according to the bitmap information.

In embodiments of the present application, the SSB resource set can be all predefined and candidate SSB resources, or part of the candidate SSB resources. The embodiment of the present application does not make any limitation on the SSB resource set, as long as it is predefined to carry the SSB. That is to say, the first signal can be carried on any predefined SSB resource.

For the same terminal device, the resources configured by the network device for the terminal device for carrying the SSB and the resources configured by the network device for the terminal device for carrying the first signal may belong to the above SSB resource set, and cannot conflict with each other.

It should be noted that the embodiment of the present application uses the resources of the predefined CSI-RS resource set and the SSB resource set to carry the first signal, but the embodiment of the present application is not limited to this, and can also be resources set predefined to carry other signals, for example, positioning reference signal (Positioning Reference Signal, PRS), etc.

Optionally, the first time-frequency resource used for carrying the first signal determined by the terminal device and the network device in the embodiment of the present application may include one CSI-RS resource, multiple CSI-RS resources, or part of at least one CSI-RS resource of the CSR-RS resource set. For example, one index in Table 1 corresponds to one CSI-RS resource, and the first time-frequency resource may include CSI-RS resource of any index in Table 1, or may also include CSI-RS resources of multiple indexes, or may include at part of CSI-RS resources of at least on index. If the first time-frequency resource belongs to the SSB resource set, it is similar to the implementation of the CSI-RS resource. For the sake of brevity, no more details here.

It should be understood that the first signal in the embodiment of the present application may be an indication signal such as the above power saving signal, that is to say, it is used to indicate whether the terminal device should perform channel or signal detection within a corresponding time window. The time window corresponding to the first signal may be the DRX On Duration, that is, the On Duration of the DRX, for example, in the DRX mechanism, the first signal may be sent to the terminal before the On Duration, and the terminal only performs PDCCH detection and data reception during the On Duration of DRX after detecting the first signal, otherwise PDCCH detection is not performed. The time window corresponding to the first signal can also be PO, for example, in a paging mechanism, the first signal can be a wake-up signal, and the wake-up signal is used to wake up the terminal, that is to say, the network device sends the first signal to the terminal device between paging occasions (PO). After receiving the first signal, the terminal device does not perform PDCCH detection on the PO and receive a paging message. Optionally, the time window corresponding to the first window may also be the PDCCH search space.

The first signal can also be used in an authorization-free scenario to indicate the terminal device that the network device has acquired a channel transmission opportunity. Only at this time, the network device may transmit the channel or signal on subsequent resources. For the terminal device, the terminal device starts to detect the channel or signal only after receiving the first signal. The first signal can also be referred to as a starting point of channel or signal detection. Before receiving the first signal, the terminal device may be in an undetected state, so that the power consumption of the terminal device can be greatly reduced. Before receiving the first signal, the terminal device may also use a relatively large cycle to detect the channel or signal. And after receiving the first signal, the terminal device may use a relatively small cycle to detect the channel or signal, for example, before receiving the first signal, the detection cycle is 5 ms, and after receiving the first signal, the detection cycle is 1 ms, so that the power consumption of the terminal device can also be reduced.

It should be noted that the network device may obtain the channel transmission opportunity for a certain cycle of time, for example, for a channel transmission opportunity window, then the time window corresponding to the first signal may also be a channel transmission opportunity window.

Those skilled in the art understand that the detection of the channels or the signals involved in the embodiments of the present application can be the detection of PDCCH or data channels such as physical downlink shared channel (Physical Downlink Shared Channel, PDSCH), etc., or the detection of the signals carried on the channel, etc.

Optionally, the network device may explicitly indicate the first time-frequency resource, for example, the network device may send indication information to the terminal device to directly indicate the position of the first time-frequency resource that transmits the first signal, and after receiving the instruction, the terminal device can detect the first signal at the indicated first time-frequency resource position.

Optionally, the network device may also implicitly indicate the first time-frequency resource, for example, the network device may configure the terminal device with a resource for carrying the first signal, for example, the resource position occupied in a time unit, and network device may configure the cycle of the resource. The terminal device can determine a periodic resource position based on the configuration, and the terminal device can directly and blindly detect the first signal at the resource position occurring cyclically. The terminal device may also determine the specific time unit in which to detect the first signal in combination with other information, for example, in combination of the time interval between the first signal and the corresponding time window, that is, the timing relationship between the first signal and the corresponding time window. The timing relationship may be configured by the network device, and the network device may also be the timing relationship configured in combination with a capability of the terminal device. The timing relationship may refer to a smallest time interval between the first signal and the corresponding time window. The terminal device may firstly determine the time unit in which the first signal may be present in combination with the timing relationship, and then combine the resource configured by the network device for carrying the first signal to determine the first time-frequency resource in the possible time unit. The terminal device can then receive the first signal on the first time-frequency resource, since the terminal device obtains possible time-frequency resources in advance according to the configuration of the network device, rather than the time-frequency occupied by the first signal actually sent by the network device resource, the terminal device can blindly detect the first signal on the first time-frequency resource.

The time unit in the embodiments of the present application may be a time slot, or may be composed of several symbols.

Optionally, in embodiments of the present application, the resource for carrying the first signal in the first time-frequency resource may include part of the subcarriers of the defined CSI-RS resource in the frequency domain, or may also occupy consecutive subcarriers. It should be noted that the occupying continuous subcarriers here may be only occupying continuous subcarriers on one CSI-RS resource, or continuous subcarriers formed by splicing multiple CSI-RS resources. In the first time-frequency resource, the subcarrier occupied by the resource carrying the first signal may also have a guard interval with the subcarrier occupied by the resource carrying other signals in the frequency domain.

In addition, the first signal can also be sent using multiple beams, and the network device can also configure the quasi co-location (Quasi co-location, QCL) relationship between the first signal and other signals, such as the quasi co-location between the first signal and the CSI-RS, or the quasi co-location between the first signal and the SSB, etc. For example, the first signal 1 to the first signal i are different first signals, which respectively have a QCL relationship with SSB 1 to SSB i, or respectively have a QCL relationship with CSI-RS resource index 0 to CSI-RS resource index i.

The so-called quasi co-location means is that, for two antenna ports, if the large-scale characteristics of the radio channel transmitting symbols through one of the antenna ports can be inferred from the radio channel transmitting symbols through the other antenna port, the two antenna ports can be treated as quasi co-location. The large-scale characteristic, that is, the QCL information includes at least one of the following parameters: at least one of Doppler shift (Doppler shift), Doppler spread (Doppler spread), average delay (average delay), and delay spread (delay spread) and a spatial Rx parameter (spatial Rx parameter). That is, when the two antenna ports are QCL, this means that the large-scale characteristics of the radio channel of one antenna port correspond to the large-scale characteristics of the radio channel of the other antenna port. Considering multiple antenna ports for transmitting reference signals (Reference Signal, RS), when the antenna ports for transmitting two different types of RS are QCL, the large-scale characteristics of the radio channel of one antenna port can be replaced by the large-scale characteristics of the radio channel of the other antenna port.

Assuming that A is a reference signal and B is a target signal, if B is quasi-co-located with A regarding the above-mentioned large-scale parameters, the UE can estimate the large-scale parameters of the quasi-co-location from A, so that B can use the large-scale parameters for subsequent operating.

FIG. 6 is a schematic block diagram of a method for transmitting a signal 300 provided by an embodiment of the present application. As shown in FIG. 6, the method 300 includes some or all of the following content:
S310: a network device determines a first time-frequency resource for carrying a first signal, where the first signal is used to indicate the terminal device to perform detection processing on a corresponding channel or signal, and the first time-frequency resource belongs to a channel state information reference signal (CSI-RS) resource set capable of carrying a CSI-RS or belongs to a synchronization signal block (SSB) resource set capable of carrying a synchronization signal (SS)/a physical broadcast channel (PBCH); and
S320: the network device sends a first signal to the terminal device on the first time-frequency resource.

Therefore, the embodiment of the present application provide a method for transmitting a signal, which can use a predefined time-frequency resource that can be used to carry CSI-RS or a time-frequency resource that can be used to carry SSB to carry a first signal similar to an power-saving signal, which can maintain better backward compatibility, and it is convenient for the terminal device to perform rate matching on the resource where the first signal is located.

Optionally, in an embodiment of the present application, the first time-frequency resource includes one CSI-RS resource, multiple CSI-RS resources, or part of at least one CSI-RS resource of the CSI-RS resource set; or the first time-frequency resource includes one SSB resource, multiple SSB resources, or part of at least one SSB resource of the SSB resource set.

Optionally, in an embodiment of the present application, the method further includes: the network device sends indication information to the terminal device, where the indication information is used to indicate the first time-frequency resource.

Optionally, in an embodiment of the present application, the method further includes: the network device sends configuration information of a resource used to carry the first signal to the terminal device.

Optionally, in an embodiment of the present application, the first signal is used to indicate the terminal device to perform channel or signal detection within a corresponding time window, or the first signal is used to indicate the terminal device not to perform channel or signal detection within the corresponding time window.

Optionally, in an embodiment of the present application, the time window includes a discontinuous reception (DRX) On Duration, a paging occasion (PO), a PDCCH search space, or a channel transmission opportunity window.

Optionally, in an embodiment of the present application, the first signal is used to indicate that the network device obtains a channel transmission opportunity.

Optionally, in an embodiment of the present application, a resource carrying the first signal in the first time-frequency resource occupies continuous subcarriers in a frequency domain.

Optionally, in an embodiment of the present application, there is a guard interval between a subcarrier occupied in the frequency domain by the resource carrying the first signal in the first time-frequency resource and a subcarrier occupied by a second signal.

Optionally, in an embodiment of the present application, the first signal is quasi-co-located with a CSI-RS and/or a synchronization signal block (SSB).

Optionally, in an embodiment of the present application, the first time-frequency resource belongs to the CSI-RS resource set, and the position of the first time-frequency resource is represented by at least one kind of information of the following information: number of ports, a code division multiplexing (CDM) type, density, a resource element (RE) position and a cycle.

Optionally, in an embodiment of the present application, the first time-frequency resource belongs to the SSB resource set, and the position of the first time-frequency resource is represented by at least one kind of information of the following information: a frequency domain position, a time domain position, and a cycle.

It should be understood that the interaction between the network device and the terminal device described by the network device and related characteristics and functions correspond to the related characteristics and functions of the terminal device. That is to say, what message the network device sends to the terminal device, the terminal device receives the corresponding message from the network device.

It should also be understood that in the various embodiments of the present application, the big or small of the sequence number of the above-mentioned processes does not mean the execution sequence. The execution sequence of each process should be determined by its function and internal logic, and should not constitute any limitation to the implementation process of the embodiments of the present application.

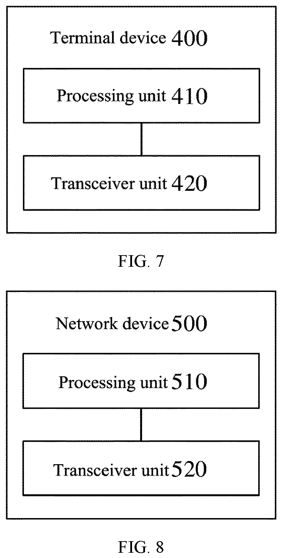

The method for transmitting a signal according to the embodiment of the present application is described in detail herein. The apparatus for transmitting a according to an embodiment of the present application will be described below in conjunction with FIG. 7 to FIG. 10. The technical features described in the method embodiment are applicable to the following apparatus embodiments.

FIG. 7 shows a schematic block diagram of a terminal device 400 according to an embodiment of the present application. As shown in FIG. 7, the terminal device 400 includes:
a processing unit 410, configured to determine a first time-frequency resource for carrying a first signal, the first signal being used to indicate detection processing for a corresponding channel or signal, and the first time-frequency resource belonging to a channel state information reference signal (CSI-RS) resource set capable of carrying a CSI-RS or belonging to a synchronization signal block (SSB) resource set capable of carrying a synchronization signal (SS)/a physical broadcast channel (PBCH); and
a transceiver unit 420 is configured to receive the first signal on the first time-frequency resource.

The first time-frequency resource includes one CSI-RS resource, multiple CSI-RS resources, or part of at least one CSI-RS resource of the CSI-RS resource set; or the first time-frequency resource includes one SSB resource, multiple SSB resources, or part of at least one of part of SSB resource of the SSB resource set.

Optionally, in an embodiment of the present application, the transceiver unit is further configured to: receive indication information sent by a network device, where the indication information is used to indicate the first time-frequency resource; and the processing unit is specifically configured to: the terminal device determines the first time-frequency resource according to the indication information.

Optionally, in an embodiment of the present application, the transceiver unit is further configured to: receive configuration information of a resource used to carry the first signal, which the configuration information is sent by the network device; and the processing unit specifically configured to: determine a time unit where the first signal is located according to a time interval between the first signal and a corresponding receiving window; and determine, a resource indicated by the configuration information in the time unit as the first time-frequency resource.

Optionally, in an embodiment of the present application, the processing unit is further configured to: determine the time interval according to a capability of the terminal device.

Optionally, in an embodiment of the present application, the first signal is used to indicate to perform channel or signal detection within a corresponding time window, or the first signal is used to indicate not to perform channel or signal detection within the corresponding time window.

Optionally, in an embodiment of the present application, the processing unit is further configured to: perform channel or signal detection within the corresponding time window, or not perform channel or signal detection within the corresponding time window.

Optionally, in an embodiment of the present application, the time window includes a discontinuous reception (DRX) opening window, a paging occasion (PO), a PDCCH search space, or a channel transmission opportunity window.

Optionally, in an embodiment of the present application, the first signal is used to indicate that the network device obtains a channel transmission opportunity.

Optionally, in an embodiment of the present application, the processing unit is further configured to: perform channel or signal detection in a first cycle after receiving the first signal, where the first cycle is smaller than a channel or signal detection cycle before receiving the first signal.

Optionally, in an embodiment of the present application, the resource carrying the first signal in the first time-frequency resource occupies continuous subcarriers in a frequency domain.

Optionally, in an embodiment of the present application, there is a guard interval between a subcarrier occupied in the frequency domain by the resource carrying the first signal in the first time-frequency resource and a subcarrier occupied by a second signal.

Optionally, in an embodiment of the present application, the first signal is quasi-co-located with s CSI-RS and/or s synchronization signal block (SSB).

Optionally, in an embodiment of the application, the first time-frequency resource belongs to the CSI-RS resource set, and the position of the first time-frequency resource is represented by at least one kind of information of the following information: number of ports, a code division multiplexing (CDM) type, density, a resource element (RE) position and a cycle.

Optionally, in an embodiment of the present application, the first time-frequency resource belongs to the SSB resource set, and the position of the first time-frequency resource is represented by at least one kind of information of the following information: a frequency domain position, a time domain position and a cycle.

It should be understood that the terminal device 400 according to the embodiment of the present application may correspond to the terminal device in the method embodiment of the present application, and the above and other operations and/or functions of each unit in the terminal device 400 are used to implement the corresponding flowchart of terminal device in the method of FIG. 3. For the sake of brevity, no more detail here.

FIG. 8 shows a schematic block diagram of a network device 500 according to an embodiment of the present application. As shown in FIG. 8, the network device 500 includes:
a processing unit 510, configured to determine a first time-frequency resource for carrying a first signal, where the first signal is used to indicate a terminal device to perform detection processing on a corresponding channel or signal, and the first time-frequency resource belongs to a channel state information reference signal (CSI-RS) resource set capable of carrying a CSI-RS or belonging to a synchronization signal block (SSB) resource set capable of carrying a synchronization signal (SS)/a physical broadcast channel (PBCH);
a transceiver unit 520, configured to send a first signal to the terminal device on the first time-frequency resource.

Optionally, in an embodiment of the present application, the first time-frequency resource includes one CSI-RS resource, multiple CSI-RS resources, or part of at least one CSI-RS resource of the CSI-RS resource set; or the first time-frequency resource includes one SSB resource, multiple SSB resources, or part of at least one SSB resource of the SSB resource set.

Optionally, in an embodiment of the present application, the network device further includes: the network device sends indication information to the terminal device, where the indication information is used to indicate the first time-frequency resource.

Optionally, in an embodiment of the present application, the network device further includes: the network device sends configuration information of a resource for carrying the first signal to the terminal device.

Optionally, in an embodiment of the present application, the first signal is used to indicate the terminal device that channel or signal detection is performed within a corresponding time window, or the first signal is used to indicate the terminal device not to perform channel or signal detection within the corresponding time window.

Optionally, in an embodiment of the present application, the time window includes a discontinuous reception (DRX) On Duration, a paging occasion (PO), a PDCCH search space, or a channel transmission opportunity window.

Optionally, in an embodiment of the present application, the first signal is used to indicate that the network device obtains a channel transmission opportunity.

Optionally, in an embodiment of the present application, a resource carrying the first signal in the first time-frequency resource occupies continuous subcarriers in a frequency domain.

Optionally, in an embodiment of the present application, there is a guard interval between a subcarrier occupied in the frequency domain by the resource carrying the first signal in the first time-frequency resource and a subcarrier occupied by a second signal.

Optionally, in an embodiment of the present application, the first signal is quasi-co-located with a CSI-RS and/or a synchronization signal block (SSB).

Optionally, in an embodiment of the application, the first time-frequency resource belongs to the CSI-RS resource set, and the position of the first time-frequency resource is represented by at least one kind of information of the following information: number of ports, a code division multiplexing (CDM) type, density, a resource element (RE) position and a cycle.

Optionally, in an embodiment of the present application, the first time-frequency resource belongs to the SSB resource set, and the position of the first time-frequency resource is represented by at least one kind of information of the following information: a frequency domain position, a time domain position and a cycle.

It should be understood that the network device 500 according to the embodiment of the present application may correspond to the network device in the method embodiment of the present application, and the above and other operations and/or functions of each unit in the network device 500 are used to implement the corresponding flowchart of the network device in the method of FIG. 6. For the sake of brevity, no more details here.

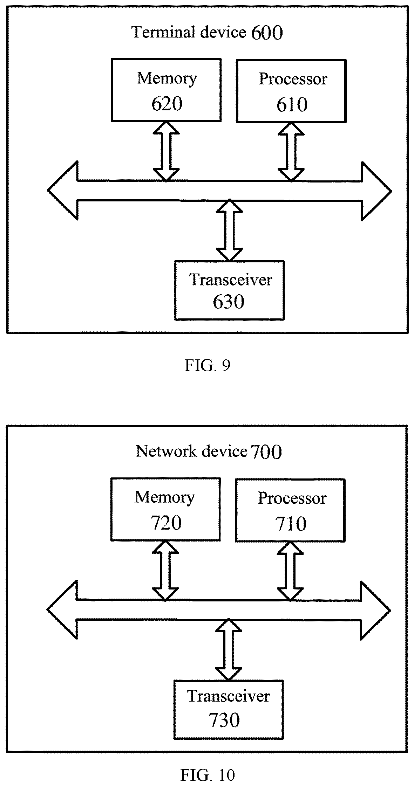

As shown in FIG. 9, an embodiment of the present application further provides a terminal device 600. The terminal device 600 may be the terminal device 400 in FIG. 7, which can be used to execute the content of the terminal device corresponding to the method 200 in FIG. 3. The terminal device 600 shown in FIG. 9 includes a processor 610, and the processor 610 can call and run a computer program from the memory to implement the method in the embodiment of the present application.

Optionally, as shown in FIG. 9, the terminal device 600 may further include a memory 620. Where a processor 610 may call and run a computer program from the memory 620 to implement the method in the embodiment of the present application.

Where the memory 620 may be a separate component independent of the processor 610, or may be integrated in the processor 610.

Optionally, as shown in FIG. 9, the terminal device 600 may further include a transceiver 630, and the processor 610 may control the transceiver 630 to communicate with other devices. Specifically, it may send information or data to other devices, or receive information or data sent by other devices.

Where the transceiver 630 may include a transmitter and a receiver. The transceiver 630 may further include an antenna, the number of which may be one or more.

Optionally, the terminal device 600 may be the terminal device of the embodiments of the present application, and the terminal device 600 may implement corresponding procedures implemented by the terminal device in each method of the embodiment of the present application. For brevity, no more details here.

In a specific implementation, the processing unit of the terminal device 600 may be implemented by the processor 610 in FIG. 9. The transceiver unit of the terminal device 600 may be implemented by the transceiver 630 in FIG. 9.

As shown in FIG. 10, an embodiment of the present application further provides a network device 700. The network device 700 may be the network device 500 in FIG. 8, which can be used to execute the content of the network device corresponding to the method 300 in FIG. 7. The network device 700 shown in FIG. 10 includes a processor 710, and the processor 710 can call and run a computer program from a memory to implement the method of an embodiment of the present application.

Optionally, as shown in FIG. 10, the network device 700 may further include a memory 720. Where the processor 710 may call and run a computer program from the memory 720 to implement the method in the embodiment of the present application.

Where the memory 720 may be a separate component independent of the processor 710, or may be integrated in the processor 710.

Optionally, as shown in FIG. 10, the network device 700 may further include a transceiver 730, and the processor 710 may control the transceiver 730 to communicate with other devices. Specifically, it may send information or data to other devices, or receive information or data sent by other devices.

Where the transceiver 730 may include a transmitter and a receiver. The transceiver 730 may further include an antenna, the number of which may be one or more.

Optionally, the network device 700 may be a network device of the embodiments of the present application, and the network device 700 may implement corresponding processes implemented by the network device of each method of the embodiment of the present application. For brevity, no more details here.

In a specific implementation, the processing unit of the network device 700 may be implemented by the processor 710 in FIG. 10. The transceiver unit of the network device 700 may be implemented by the transceiver 730 in FIG. 10.

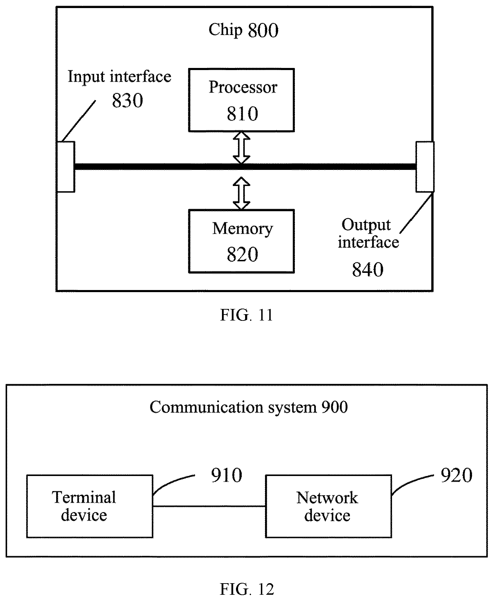

FIG. 11 is a schematic structural diagram of a chip of an embodiment of the present application. The chip 800 shown in FIG. 11 includes a processor 810, and the processor 810 can call and run a computer program from the memory to implement the method of the embodiment of the present application.

Optionally, as shown in FIG. 11, the chip 800 may further include a memory 820. Where the processor 810 can call and run a computer program from the memory 820 to implement the method of the embodiment of the present application.

Where the memory 820 may be a separate component independent of the processor 810, or may be integrated in the processor 810.

Optionally, the chip 800 may further include an input interface 830. Where the processor 810 can control the input interface 830 to communicate with other devices or chips, and specifically, can obtain information or data sent by other devices or chips.

Optionally, the chip 800 may further include an output interface 840. Where the processor 810 can control the output interface 840 to communicate with other devices or chips, and specifically, can output information or data to other devices or chips.

Optionally, the chip can be applied to the network device of the embodiment of the present application, and the chip can implement the corresponding process implemented by the network device in the each method of the embodiment of the present application. For brevity, no more details here.

Optionally, the chip can be applied to the terminal device of the embodiment of the present application, and the chip can implement the corresponding process implemented by the terminal device in each method of the embodiment of the present application. For brevity, no more details here.

It should be understood that the chip mentioned in the embodiment of the present application may also be referred to as a system-level chip, a system chip, a chip system or a system-on-chip chip, etc.

FIG. 12 is a schematic block diagram of a communication system 900 provided by an embodiment of the present application. As shown in FIG. 12, the communication system 900 includes a terminal device 910 and a network device 920.

Where the terminal device 910 can be used to implement the corresponding function implemented by the terminal device in the above method, and the network device 920 can be used to implement the corresponding function implemented by the network device in the above method. For brevity, no more details here.

It should be understood that the processor of the embodiment of the present application may be an integrated circuit chip with signal processing capability. In the implementation process, the steps of the above method embodiments can be completed by hardware integrated logic circuits in the processor or instructions in the form of software. The aforementioned processor may be a general-purpose processor, a digital signal processor (Digital Signal Processor, DSP), an application specific integrated circuit (Application Specific Integrated Circuit, ASIC), a field programmable gate array (Field Programmable Gate Array, FPGA), or other programming logic devices, discrete gates or transistor logic devices, and discrete hardware components. The methods, steps, and logic block diagrams disclosed in the embodiment of the present application can be implemented or executed. The general-purpose processor may be a microprocessor or the processor may also be any conventional processor or the like. The steps of the method disclosed in an embodiment of the present application may be directly embodied as being executed and completed by a hardware decoding processor, or executed and completed by a combination of hardware and software modules in the decoding processor. The software module can be located in a mature storage medium in the field, for example, random access memory, flash memory, read-only memory, programmable read-only memory, or electrically erasable programmable memory, or registers,. The storage medium is located in the memory, and the processor reads the information in the memory and completes the steps of the above method in combination with its hardware.

It can be understood that the memory in the embodiment of the present application may be a volatile memory or a non-volatile memory, or may include both volatile memory and non-volatile memory. Among them, the non-volatile memory can be read-only memory (Read-Only Memory, ROM), programmable read-only memory (Programmable ROM, PROM), erasable programmable read-only memory (Erasable PROM, EPROM), and electrically erasable programmable read-only memory (Electrically EPROM, EEPROM) or flash memory. The volatile memory may be a random access memory (Random Access Memory, RAM), which is used as an external cache. By way of exemplary but not restrictive description, many forms of RAM are available, such as static random access memory (Static RAM, SRAM), a dynamic random access memory (Dynamic RAM, DRAM), a synchronous dynamic random access memory (Synchronous DRAM, SDRAM), a double data rate SDRAM (double data rate SDRAM, DDR SDRAM), an enhanced synchronous dynamic random access memory (enhanced SDRAM, ESDRAM), a synchronous link dynamic random access memory (synch link DRAM, SLDRAM) and a direct Rambus RAM (Direct Rambus RAM, DR RAM). It should be noted that the memories of the systems and methods described herein are intended to include, but are not limited to, these and any other suitable types of memories.

It should be understood that the above memories are exemplary but not restrictive. For example, the memory in the embodiment of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synch link dynamic random access memory (synch link DRAM, SLDRAM) and a direct Rambus RAM (Direct Rambus RAM, DR RAM), etc. That is to say, the memory in the embodiment of the present application is intended to include but not limited to these and any other suitable types of memory.

An embodiment of the present application further provides a computer-readable storage medium for storing computer programs.

Optionally, the computer-readable storage medium may be applied to the network device in an embodiment of the present application, and the computer program causes the computer to execute the corresponding process implemented by the network device in each method of embodiments of the present application. For brevity, no more details here.

Optionally, the computer-readable storage medium can be applied to the terminal device in an embodiment of the present application, and the computer program causes the computer to execute the corresponding process implemented by the mobile terminal/terminal device in each method of the embodiments of the present application. For brevity, no more details here.

An embodiment of the present application further provides a computer program product including computer program instructions.

Optionally, the computer program product may be applied to the network device in the embodiment of the present application, and the computer program instructions cause the computer to execute the corresponding process implemented by the network device in each method of the embodiment of the present application. For brevity, no more details here.

Optionally, the computer program product can be applied to the terminal device in the embodiment of the present application, and the computer program instructions cause the computer to execute the corresponding process implemented by the mobile terminal/ the terminal device in each method of the embodiment of the present application. For brevity, no more details here.

An embodiment of the present application further provides a computer program.

Optionally, the computer program can be applied to the network device in an embodiment of the present application. When running on the computer, the computer program causes the computer to perform the corresponding process implemented by the network device in each method of the embodiments of the present application. For brevity, it will not be repeated here.

Optionally, the computer program can be applied to the terminal device in the embodiment of the present application. When running on the computer, the computer program causes the computer to perform the corresponding process implemented by the terminal device in each method of the embodiment of the present application. For brevity, no more details here.

Persons of ordinary skilled in the art may be aware that the units and algorithm steps of each example described in the embodiments disclosed herein can be implemented by electronic hardware or a combination of computer software and electronic hardware. Whether these functions are executed by hardware or software depends on the specific application and design constraint conditions of the technical solution. Professionals and technicians can use different methods for each specific application to implement the described functions, but such implementation should not be considered beyond the scope of the present application.

Those skilled in the art can clearly understand that, for the convenience and conciseness of description, the specific working process of the above-described system, apparatus, and unit can refer to the corresponding process in the foregoing method embodiment, no more details here.

In the several embodiments provided in the present application, it should be understood that the disclosed system, apparatus, and method may be implemented in other ways. For example, the apparatus embodiments described above are only illustrative. For example, the division of the units is only a logical function division, and there may be other divisions in actual implementation, for example, multiple units or components can be combined or it can be integrated into another system, or some features can be ignored or not be executed. In addition, the displayed or discussed mutual coupling or direct coupling or communication connection may be indirect coupling or communication connection through some interfaces, apparatuses or units, and may be in electrical, mechanical or other forms.

The units described as separate components may or may not be physically separated, and the components displayed as units may or may not be physical units, that is, they may be located in one place, or they may be distributed on multiple network units. Some or all of the units may be selected according to actual needs to achieve the objections of the solutions of the embodiments.

In addition, each functional unit in each embodiment of the present application may be integrated into one processing unit, or each unit may exist alone physically, or two or more units may be integrated into one unit.

If the function is implemented in the form of a software functional unit and sold or used as an independent product, it can be stored in a computer readable storage medium. Based on this understanding, the technical solution of the present application essentially or the part that contributes to the existing technology or the part of the technical solution can be embodied in the form of a software product, and the computer software product is stored in a storage medium, which includes several instructions are used to make a computer device (which may be a personal computer, a server, or a network device, etc.) execute all or part of the steps of the method described in each embodiment of the present application. The aforementioned storage media include: a U disk, a mobile hard disk, read-only memory (Read-Only Memory, ROM), a random access memory (Random Access Memory, RAM), a magnetic disk or an optical disk and other media that can store program codes.

The above are only specific implementations of the present application, but the protection scope of the present application is not limited to this. Changes or substitutions which the persons skilled in the art can easily think of within the technical scope disclosed by the present application should be covered within the protection scope of the present application. Therefore, the protection scope of the present application shall be subject to the protection scope of the claims.

## Claims

1. A method for transmitting a signal, comprising:
determining, by a terminal device, a first time-frequency resource for carrying a first signal, the first signal being used to indicate detection processing for a corresponding channel or signal, and the first time-frequency resource belonging to a channel state information reference signal (CSI-RS) resource set capable of carrying a CSI-RS or belonging to a synchronization signal block (SSB) resource set capable of carrying a synchronization signal (SS)/a physical broadcast channel (PBCH); and
receiving, by the terminal device, the first signal on the first time-frequency resource.

2. The method according to claim 1, wherein the first time-frequency resource comprises one CSI-RS resource, multiple CSI-RS resources, or part of at least one CSI-RS resource of the CSI-RS resource set; or the first time-frequency resource comprises one SSB resource, multiple SSB resources, or part of at least one SSB resource of the SSB resource set.

3. The method according to claim 1 or 2, wherein the determining, by a terminal device, a first time-frequency resource for carrying a first signal comprises:
receiving, by the terminal device, indication information sent by a network device, the indication information being used to indicate the first time-frequency resource; and
determining, by the terminal device, the first time-frequency resource according to the indication information.

4. The method according to claim 1 or 2, wherein the determining, by a terminal device, a first time-frequency resource for carrying a first signal comprises:
receiving, by the terminal device, configuration information of a resource used to carry the first signal, the configuration information being sent by the network device;
determining, by the terminal device, a time unit where the first signal is located according to a time interval between the first signal and a corresponding receiving window; and
determining, by the terminal device, a resource indicated by the configuration information in the time unit as the first time-frequency resource.

5. The method according to claim 4, wherein the method further comprises:
determining, by the terminal device, the time interval according to a capability of the terminal device.

6. The method according to any one of claims 1 to 5, wherein the first signal is used to indicate to perform channel or signal detection within a corresponding time window, or the first signal is used to indicate not to perform channel or signal detection performed within the corresponding time window.

7. The method according to claim 6, wherein the method further comprises:
performing, by the terminal device, channel or signal detection within the corresponding time window, or
not performing, by the terminal device, channel or signal detection within the corresponding time window.

8. The method according to claim 6 or 7, wherein the time window comprises a discontinuous reception (DRX) On Duration, a paging occasion (PO), a PDCCH search space, or a channel transmission opportunity window.

9. The method according to any one of claims 1 to 5, wherein the first signal is used to indicate that the network device obtains a channel transmission opportunity.

10. The method according to claim 9, wherein the method further comprises:
performing, by the terminal device, channel or signal detection in a first cycle after receiving the first signal, the first cycle being smaller than a channel or signal detection cycle before receiving the first signal.

11. The method according to any one of claims 1 to 10, wherein a resource carrying the first signal in the first time-frequency resource occupies continuous subcarriers in a frequency domain.

12. The method according to claim 11, wherein there is a guard interval between a subcarrier occupied in the frequency domain by the resource carrying the first signal in the first time-frequency resource and a subcarrier occupied by a second signal.

13. The method according to any one of claims 1 to 12, wherein the first signal is quasi co-located with a CSI-RS and/or a synchronization signal block (SSB).

14. The method according to any one of claims 1 to 13, wherein the first time-frequency resource belongs to the CSI-RS resource set, and a position of the first time-frequency resource is represented by at least one kind of information of the following information:
number of ports, a code division multiplexing (CDM) type, density, a resource element (RE) position and a cycle.

15. The method according to any one of claims 1 to 13, wherein the first time-frequency resource belongs to the SSB resource set, and a position of the first time-frequency resource is represented by at least one kind of information of the following information: a frequency domain position, a time domain position and a cycle.

16. A method for transmitting a signal, comprising:
determining, by a network device, a first time-frequency resource for carrying a first signal, the first signal being used to indicate the terminal device to perform detection processing on a corresponding channel or signal, and the first time-frequency resource belonging to a channel state information reference signal (CSI-RS) resource set capable of carrying a CSI-RS or belonging to a synchronization signal block (SSB) resource set capable of carrying a synchronization signal (SS)/a physical broadcast channel (PBCH); and
sending, by the network device, the first signal to the terminal device on the first time-frequency resource.

17. The method according to claim 16, wherein the first time-frequency resource comprises one CSI-RS resource, multiple CSI-RS resources, or part of at least one CSI-RS resource of the CSI-RS resource set; or the first time-frequency resource comprises one SSB resource, multiple SSB resources, or part of at least one SSB resource of the SSB resource set.

18. The method according to claim 16 or 17, wherein the method further comprises:
sending, by the network device, indication information to the terminal device, the indication information being used to indicate the first time-frequency resource.

19. The method according to claim 16 or 17, wherein the method further comprises:
sending, by the network device, configuration information of a resource used to carry the first signal to the terminal device.

20. The method according to any one of claims 16 to 19, wherein the first signal is used to indicate the terminal device to perform channel or signal detection within a corresponding time window, or the first signal is used to indicate the terminal device not to perform channel or signal detection within the corresponding time window.

21. The method according to claim 20, wherein the time window comprises a discontinuous reception (DRX) On Duration, a paging occasion (PO), a PDCCH search space, or a channel transmission opportunity window.

22. The method according to any one of claims 16 to 21, wherein the first signal is used to indicate that the network device obtains a channel transmission opportunity.

23. The method according to any one of claims 16 to 22, wherein a resource carrying the first signal in the first time-frequency resource occupies continuous subcarriers in a frequency domain.

24. The method according to claim 23, wherein there is a guard interval between a subcarrier occupied in the frequency domain by the resource carrying the first signal in the first time-frequency resource and a subcarrier occupied by a second signal.

25. The method according to any one of claims 16 to 24, wherein the first signal is quasi-co-located with a CSI-RS and/or a synchronization signal block (SSB).

26. The method according to any one of claims 16 to 25, wherein the first time-frequency resource belongs to the CSI-RS resource set, and a position of the first time-frequency resource is represented by at least one kind of information of the following information: number of ports, a code division multiplexing (CDM) type, density, a resource element (RE) position and a cycle.

27. The method according to any one of claims 16 to 25, wherein the first time-frequency resource belongs to the SSB resource set, and a position of the first time-frequency resource is represented by at least one kind of information of the following information: a frequency domain position, a time domain position and a cycle.

28. A terminal device, comprising:
a processing unit, configured to determine a first time-frequency resource for carrying a first signal, the first signal being used to indicate detection processing for a corresponding channel or signal, and the first time-frequency resource belonging to a channel state information reference signal (CSI-RS) resource set capable of carrying a CSI-RS or belonging to a synchronization signal block (SSB) resource set capable of carrying a synchronization signal (SS)/a physical broadcast channel (PBCH); and
a transceiver unit, configured to receive the first signal on the first time-frequency resource.

29. The terminal device according to claim 28, wherein the first time-frequency resource comprises one CSI-RS resource, multiple CSI-RS resources, or part of at least one CSI-RS resource of the CSI-RS resource set; or the first time-frequency resource comprises one SSB resource, multiple SSB resources, or part of at least one SSB resource of the SSB resource set.

30. The terminal device according to claim 28 or 29, wherein the transceiver unit is further configured to:
receive indication information sent by a network device, wherein the indication information is used to indicate the first time-frequency resource; and
the processing unit is specifically configured to:
the terminal device determines the first time-frequency resource according to the indication information.

31. The terminal device according to claim 28 or 29, wherein the transceiver unit is further configured to:
receive configuration information of a resource used to carry the first signal, the configuration information being sent by the network device; and
the processing unit is specifically configured to: determine a time unit where the first signal is located according to a time interval between the first signal and a corresponding receiving window; and
determine, a resource indicated by the configuration information in the time unit as the first time-frequency resource.

32. The terminal device according to claim 31, wherein the processing unit is further configured to:
determine the time interval according to a capability of the terminal device.

33. The terminal device according to any one of claims 28 to 32, wherein the first signal is used to indicate to perform channel or signal detection within a corresponding time window, or the first signal is used to indicate not to perform channel or signal detection within the corresponding time window.

34. The terminal device according to claim 33, wherein the processing unit is further configured to:
perform channel or signal detection within the corresponding time window, or
not perform channel or signal detection within the corresponding time window.

35. The terminal device according to claim 33 or 34, wherein the time window comprises a discontinuous reception (DRX) opening window, a paging occasion (PO), a PDCCH search space, or a channel transmission opportunity window.

36. The terminal device according to any one of claims 28 to 32, wherein the first signal is used to indicate that the network device obtains a channel transmission opportunity.

37. The terminal device according to claim 36, wherein the processing unit is further configured to:
perform channel or signal detection in a first cycle after receiving the first signal, wherein the first cycle is smaller than a channel or signal detection cycle before receiving the first signal.

38. The terminal device according to any one of claims 28 to 37, wherein a resource carrying the first signal in the first time-frequency resource occupies continuous subcarriers in a frequency domain.

39. The terminal device according to claim 38, wherein there is a guard interval between a subcarrier occupied in the frequency domain by the resource carrying the first signal in the first time-frequency resource and a subcarrier occupied by a second signal.

40. The terminal device according to any one of claims 28 to 39, wherein the first signal is quasi-co-located with a CSI-RS and/or a synchronization signal block (SSB).

41. The terminal device according to any one of claims 28 to 40, wherein the first time-frequency resource belongs to the CSI-RS resource set, and a position of the first time-frequency resource is represented by at least one kind of information of the following information: number of ports, a code division multiplexing (CDM) type, density, a resource element (RE) position and a cycle.

42. The terminal device according to any one of claims 28 to 40, wherein the first time-frequency resource belongs to the SSB resource set, and a position of the first time-frequency resource is represented by at least one kind of information of the following information: a frequency domain position, a time domain position and a cycle.

43. A network device, comprising:
a processing unit, configured to determine a first time-frequency resource for carrying a first signal, wherein the first signal is used to indicate a terminal device to perform detection processing on a corresponding channel or signal, and the first time-frequency resource belongs to a channel state information reference signal (CSI-RS) resource set capable of carrying a CSI-RS or belonging to a synchronization signal block (SSB) resource set capable of carrying a synchronization signal (SS)/a physical broadcast channel (PBCH);
a transceiver unit, configured to send the first signal to the terminal device on the first time-frequency resource.

44. The network device according to claim 43, wherein the first time-frequency resource comprises one CSI-RS resource, multiple CSI-RS resources, or part of at least one CSI-RS resource of the CSI-RS resource set; or the first time-frequency resource comprises one SSB resource, multiple SSB resources, or part of at least one SSB resource of the SSB resource set.

45. The network device according to claim 43 or 44, wherein the network device further comprises:
the network device sends indication information to the terminal device, wherein the indication information is used to indicate the first time-frequency resource.

46. The network device according to claim 43 or 44, wherein the network device further comprises:
the network device sends configuration information of a resource for carrying the first signal to the terminal device.

47. The network device according to any one of claims 43 to 46, wherein the first signal is used to indicate the terminal device that channel or signal detection is performed within a corresponding time window, or the first signal is used to indicate the terminal device not to perform channel or signal detection within the corresponding time window.

48. The network device according to claim 47, wherein the time window comprises a discontinuous reception (DRX) On Duration, a paging occasion (PO), a PDCCH search space, or a channel transmission opportunity window.

49. The network device according to any one of claims 43 to 46, wherein the first signal is used to indicate that the network device obtains a channel transmission opportunity.

50. The network device according to any one of claims 43 to 49, wherein a resource carrying the first signal in the first time-frequency resource occupies continuous subcarriers in a frequency domain.

51. The network device according to claim 50, wherein there is a guard interval between a subcarrier occupied in the frequency domain by the resource carrying the first signal in the first time-frequency resource and a subcarrier occupied by a second signal.

52. The network device according to any one of claims 43 to 51, wherein the first signal is quasi co-located with a CSI-RS and/or a synchronization signal block (SSB).

53. The network device according to any one of claims 43 to 52, wherein the first time-frequency resource belongs to the CSI-RS resource set, and a position of the first time-frequency resource is represented by at least one kind of information of the following information: number of ports, a code division multiplexing (CDM) type, density, a resource element (RE) position and a cycle.

54. The network device according to any one of claims 43 to 52, wherein the first time-frequency resource belongs to the SSB resource set, and a position of the first time-frequency resource is represented by at least one kind of information of the following information: a frequency domain position, a time domain position and a cycle.

55. A terminal device, comprising: a processor and a memory, wherein the memory is used to store a computer program, and the processor is used to call and run the computer program stored in the memory to execute the method according to any one of claims 1 to 15.

56. A network device, comprising: a processor and a memory, wherein the memory is used to store a computer program, and the processor is used to call and run the computer program stored in the memory to execute the method according to any one of claims 16 to 27.

57. A chip, comprising: a processor, configured to call and run a computer program from a memory, so that a device installed with the chip executes the method according to any one of claims 1 to 15.

58. A chip, comprising: a processor, configured to call and run a computer program from a memory, so that a device installed with the chip executes the method according to any one of claims 16 to 27.

59. A computer-readable storage medium, configured to store a computer program that enables a computer to execute the method according to any one of claims 1 to 15.

60. A computer-readable storage medium, configured to store a computer program that enables a computer to execute the method according to any one of claims 16 to 27.

61. A computer program product, comprising computer program instructions that enable a computer to execute the method according to any one of claims 1 to 15.

62. A computer program product, comprising computer program instructions that enable a computer to execute the method according to any one of claims 16 to 27.

63. A computer program, wherein the computer program enables a computer to execute the method according to any one of claims 1 to 15.

64. A computer program, wherein the computer program enables a computer to execute the method according to any one of claims 16 to 27.
